# EUROPÄISCHE PATENTSCHRIFT

(11) **EP 0 920 540 B1**
(45) Veröffentlichungstag und Bekanntmachung des Hinweises auf die Patenterteilung: **05.07.2000**
(21) Anmeldenummer: 96930956.6
(22) Anmeldetag: 26.08.1996
(51) Int. Cl.: C22F 1/04, C22F 1/047, B23D 33/00

(54) **VERFAHREN ZUM HERSTELLEN VON KRITISCH ZU VERFORMENDEN BAUTEILEN AUS LEICHTMETALLBAND**
METHOD FOR MANUFACTURING CRITICAL DISTORSION BUILDING ELEMENTS COMPRISING LIGHT METAL STRIPS
PROCEDE DE FABRICATION D'ELEMENTS DE CONSTRUCTION A DEFORMATION CRITIQUE CONSTITUES DE BANDES METALLIQUES LEGERES

(43) Veröffentlichungstag der Anmeldung: 09.06.1999
(73) Patentinhaber: Michelin Kronprinz Werke GmbH, 42697 Solingen (DE); VAW Aluminium AG, 53117 Bonn (DE)
(72) Erfinder: TANZMANN, Wolfgang, D-42657 Solingen (DE); TÜMMLER, Helmut, D-40723 Hilden (DE); DUNING, Ralf, D-42719 Solingen (DE); GOHRBANDT, Uwe, D-42781 Haan (DE); VON CZARNOWSKI, Peter, D-47906 Kempen (DE); SÖLLNER, Gerhardt, D-53757 St. Augustin (DE)
(74) Vertreter: Meissner, Peter E., Dipl.-Ing.
(86) Internationale Anmeldenummer: DE9601602
(87) Internationale Veröffentlichungsnummer: WO9808996

(56) Entgegenhaltungen:
- EP-A- 0 699 775
- DE-A- 3 247 698
- DE-A- 3 405 478
- DE-A- 3 903 726
- DE-A- 19 619 034
- DE-C- 3 318 861
- DE-C- 4 313 543
- US-A- 4 405 386
- US-A- 4 959 107
- PATENT ABSTRACTS OF JAPAN vol. 009, no. 268 (M-424), 25.Oktober 1985 & JP 60 114412 A (NITSUSHIN SEIKOU KK), 20.Juni 1985,

## Beschreibung

Die Erfindung betrifft ein Verfahren zum Herstellen von kritisch zu verformenden Bauteilen aus Leichtmetallband gemäß dem Gattungsbegriff des Hauptanspruches.

Bei Bauteilen aus naturharten Al-Legierungen insbesondere der Typen AlMg bzw. AlMg-Mn treten beim Kalt-Umformen Probleme an den Schnittkanten vom Längsteilen auf, die neben den durch das Längsteilen oder Spalten bedingten Mikrorissen vor allem auf die dadurch entstehende Kaltverfestigung zurückzuführen sind. Um eine höchstmögliche Umformbarkeit zu gewährleisten werden die gesamten Platinen im Stapel weichgeglüht oder das gesamte Coil in sogenannten Haubenöfen. Beim Abziehen des Bandes vom weichgeglühten Coil wird die Coilkrümmung plan gerichtet. Dabei entsteht eine gewisse zusätzliche Kaltverfestigung, die zu einer weiteren Erhöhung der Streckgrenze und Verringerung der Dehnung führt. Nachteilig bei den bekannten Verfahren ist der energetische und zeitliche Aufwand für das Weichglühen des gesamten Materials.

Aus der DE 3247698 C2 ist ein Zwischenglühen von Band aus einer AlMgMn-Legierung bekannt. Diese Zwischenglühung, die zwischen zwei aufeinanderfolgenden Kaltwalzstichen erfolgt, wird als Bundglühung bei einer Temperatur von 300 bis 410° C während einer Dauer von ½ bis 8 Stunden durchgeführt. Alternativ kann die Glühung auch bei 300 bis 440° C als Banddurchlaufglühung für eine Dauer von 2 Sekunden bis 2 Minuten erfolgen. Beide Glühverfahren sind energetisch (Zeit, Temperatur) sehr aufwendig und auch der Aufwand für das Handling ist nicht unbeachtlich. Das letztgenannte Glühverfahren als Banddurchlaufglühung erfordert zudem einen enormen apparativen Aufwand.

Aus der DE 4313543 C1 ist ein Verfahren zur Wärmebehandlung kontinuierlich durchlaufender Leichtmetallbänder bekannt. Insbesondere für dünnwandige Bänder mit einer Dicke von 0,02 bis 1,5 mm treten bei hohen Durchlaufgeschwindigkeiten und / oder großen Bandbreiten Probleme im Randbereich auf. Diese werden oft wellig, was für die spätere Verarbeitung störend sein kann. Dieser Randbereicheffekt kann dadurch vermieden werden, wenn zumindest auf einem Teil der Behandlungsstrecke den Randbereichen des Bandes pro Flächeneinheit mehr Wärme zugeführt wird als dem Bandmittenbereich. Vom Prinzip entspricht diese Art der Glühung der Banddurchlaufglühung mit einem steileren Temperaturgradienten im Randbereich zur Vermeidung der Wellenbildung. Die bereits bekannten Nachteile der Banddurchlaufglühung sind hier ebenfalls zutreffend.

Aufgabe der Erfindung ist es, ein Verfahren zum Herstellen von kritisch zu verformenden Bauteilen aus Leichtmetallband anzugeben, das gegenüber dem bekannten Verfahren im Hinblick auf Energieverbrauch, Taktzeit und apparativen Aufwand kostengünstiger ist.

Diese Aufgabe wird erfindungsgemäß dadurch gelöst, daß nur der Bereich der Längskanten der kalt längsgeteilten Warmbänder kurzfristig so erwärmt wird, daß ein für das Weichglühen üblicher Temperatur-Zeit-Bereich durchlaufen wird. Dies ist dann gegeben, wenn die Wärme im Längskantenbereich bis zu einer in Bandbreite liegenden Tiefe von mindestens 1 mm bis max. 10 mm eindringt und die Wärmezufuhr so bemessen ist, daß über einen Zeitraum von mehr als 0,1 Sekunden bis maximal 10 Sekunden eine Temperatur von mehr als 150° C erreicht wird. Untersuchungen in diesem Zusammenhang haben ergeben, daß die Schnittkanten des Spaltbandes als kritisch für die nachfolgenden Kalt-Umformungen anzusehen sind. Man hat festgestellt, daß in diesem Bereich beim Spalten Mikrorisse entstehen, die bei der Kalt-Umformung zu unzulässigen Anrissen führen können. Bekannt ist es bereits, diese Schnittkanten abzufräsen, um auf diese Weise den kritischen Bereich zu beseitigen. Dieses Verfahren ist sehr zeitaufwendig und die Spänebeseitigung bereitet erhebliche Probleme. Außerdem ist es unwirtschaftlich, da die Spaltbänder entsprechend der Bearbeitungstiefe breiter geschnitten werden müssen, um das angestrebte Sollmaß zu erreichen.

Die erforderliche Wärmeeintragung für das Weichglühen der Bereiche der Längskanten kann wahlweise oder in Kombination mittels Strahlung, Konvektion oder Leitung erfolgen. Als besonders günstig hat sich die induktive Erwärmung herausgestellt, da bei diesen Verfahren in relativ kurzer Zeit erhebliche Wärmemengen eingebracht werden können, so daß diese Operation nicht zum taktbestimmenden Arbeitsschritt wird. Alternativ ist es auch möglich, die Wärme über Laser oder konventionelle Gasbrenner einzubringen.

Die Glühoperation kann je nach Anwendungsfall am Band nach dem Spalten und vor dem Aufcoilen oder nach dem Aufcoilen und vor dem Richten oder nach dem Richten und vor dem Querteilen durchgeführt werden oder am einzelnen quergeteilten Streifen oder im Stapelmagazin. Für den Sonderfall der Felgenherstellung ist auch eine Wärmebehandlung an der Bandage vor oder sogar während der Kalt-Profilierung möglich.

Das Verfahren ist anwendbar für alle kritischen Kalt-Umformoperationen insbesondere bei der Herstellung von längsnahtgeschweißten auf Zustand geglühten Rohren sowie bei der Herstellung von Kfz-Felgen aus Leichtmetallband in einem Dickenbereich von 2 - 6 mm.

Für den erstgenannten Fall werden zweckmäßigerweise in der Einformstrecke und vor dem Verschweißen die Kantenbereiche weichgeglüht. Der zweitgenannte Fall der Felgenfertigung wird anhand eines Ausführungsbeispieles näher erläutert.

Im Walzwerk werden die Brammen zu mehrfachbreiten Muttercoils auf Dicke ausgewalzt. Diese werden in einer nachfolgenden Operation auf Nennbreite kalt längsgeteilt und wieder aufgecoilt, wobei die oben genannten Mikrorisse und Bandkantenaufhärtungen bzw. Kaltverfestigungen entstehen.

Beim Verarbeiten zu Felgen wird das Band abgehaspelt, gerichtet und auf Länge quergeteilt. Dabei kann eine mechanische Behandlung der Längskanten, z. B. Arondieren, in den Ablauf integriert sein. Die einzelnen Streifen werden in Stapelmagazinen zwischengepuffert, dann in einer Maschine gebogen oder gerundet Vor der Übergabe in die Schweißmaschine können die Enden flachgedrückt werden. Nach dem Stumpfschweißen wird die Naht bearbeitet und ggf. die Bandage wieder gerundet.

Die so hergestellte Bandage wird anschließend nach bekannten Verfahren zu einer Felge profiliert.

In diesem Fertigungsprozeß wird vorzugsweise nach dem Querteilen an den einzelnen Streifen die erfindungsgemäße Wärmebehandlung durchgeführt.

## Patentansprüche

1. Verfahren zum Herstellen von kritisch zu verformenden Bauteilen aus Leichtmetallband, vorzugsweise naturharte Al-Legierungen der Typen AlMg oder AlMg-Mn, bei dem durch mindestens einen Kaltumformungsschritt aus dem Band das gewünschte Bauteil hergestellt wird und mittels einer Weichglühung vor der Kaltumformung die Umformbarkeit verbessert wird,
dadurch gekennzeichnet,
daß nur der Bereich der Längskanten der kalt längsgeteilten Bänder in einer in Bandbreite liegenden Tiefe von mindestens 1 mm bis maximal 10 mm so erwärmt wird, daß ein für das Weichglühen üblicher Temperatur-Zeit-Bereich durchlaufen wird, wobei eine Temperatur von mehr als 150° C über einen Zeitraum von mehr als 0,1 bis maximal 10 Sekunden erreicht wird.

2. Verfahren nach Anspruch 1,
dadurch gekennzeichnet,
daß die Einbringung der Wärme wahlweise oder in Kombination durch Strahlung, Konvektion oder Leitung erfolgt.

3. Verfahren nach den Ansprüchen 1 und 2,
dadurch gekennzeichnet,
daß im Takt der Fertigungsanlage zur Herstellung eines Bauteiles aus Leichtbar d die Glühung erfolgt.

4. Verfahren nach den Ansprüchen 1 und 2,
dadurch gekennzeichnet,
daß die Glühoperation nach dem Spalten und vor dem Aufcoilen durchgeführt wird.

5. Verfahren nach den Ansprüchen 1 und 2,
dadurch gekennzeichnet,
daß die Glühoperation nach dem Abcoilen und vor dem Richten durchgeführt wird.

6. Verfahren nach den Ansprüchen 1 und 2,
dadurch gekennzeichnet,
daß die Glühoperation nach dem Richten und vor dem Querteilen durchgeführt wird, um die durch den Richtvorgang entstandene zusätzliche Kaltverfestigung zu eliminieren.

7. Verfahren nach den Ansprüchen 1 und 2,
dadurch gekennzeichnet,
daß die Glühoperation nach dem Querteilen an einzelnen Streifen erfolgt.

8. Verfahren nach Anspruch 7,
dadurch gekennzeichnet,
daß die Glühoperation nach dem Querteilen im Stapelmagazin erfolgt.

9. Verfahren nach den Ansprüchen 1 und 2,
dadurch gekennzeichnet,
daß die Glühoperation an der Bandage vor dem Kalt-Profilieren erfolgt.

10. Verfahren nach den Ansprüchen 1 und 2,
dadurch gekennzeichnet,
daß die Glühoperation beim Kalt-Profilieren vor der kritischen Umformstufe erfolgt.

11. Verfahren nach einem der vorhergehenden Ansprüche,
dadurch gekennzeichnet,
daß die Glühung über Induktion erfolgt.

12. Anwendung des Verfahrens nach Anspruch 1 zur Herstellung weich bzw. auf Zustand geglühter längsnahtgeschweißter Rohre aus Leichtmetall, wobei die Glühung im Fertigungsablauf in der Einformstrecke vor dem Verschweißen erfolgt.

13. Anwendung des Verfahrens nach Anspruch 1 zur Herstellung von Kfz-Felgen aus Leichtmetallband im Dickenbereich von 2 - 6 mm, wobei vor der kritischen Kalt-Umformung die Bereiche der Längskanten der nach dem Querteilen entstandenen einzelnen Streifen weichgeglüht werden.

## Claims

1. A process for manufacturing critical distortion components from light metal strip,
preferably self-hardening aluminium alloys of the AlMg or AlMg-Mn type, in which, due to at least one cold-forming step, the desired component is manufactured from the strip and the deformability thereof is improved by means of soft annealing before cold forming,
characterised in that
only the region of the longitudinal edges of the strips cut longitudinally in the cold state is heated in a depth, in the width of the strip, of at least 1 mm to at most 10 mm such that a temperature/time range conventional for soft annealing is achieved, with a temperature of more than 150°C being achieved over a period of more than 0.1 to at most 10 seconds.

2. A process according to Claim 1, characterised in that the heat is introduced selectively or in combination by radiation, convection or conduction.

3. A process according to Claims 1 and 2, characterised in that the annealing takes place in the cycle of the production plant for producing a component from lightweight strip.

4. A process according to Claims 1 and 2, characterised in that the annealing operation is performed after splitting and before coiling.

5. A process according to Claims 1 and 2, characterised in that the annealing operation is performed after uncoiling and before straightening.

6. A process according to Claims 1 and 2, characterised in that the annealing operation is performed after straightening and before cross-cutting, in order to eliminate the additional cold hardening produced by the straightening operation.

7. A process according to Claims 1 and 2, characterised in that the annealing operation takes place after the cross-cutting on individual strips.

8. A process according to Claim 7, characterised in that the annealing operation takes place after the cross-cutting in the stack magazine.

9. A process according to Claims 1 and 2, characterised in that the annealing operation takes place on the tyre before cold profiling.

10. A process according to Claims 1 and 2, characterised in that the annealing operation takes place upon the cold profiling before the critical forming stage.

11. A process according to one of the preceding claims, characterised in that the annealing is effected by means of induction.

12. The application of the process according to Claim 1 to the manufacture of soft- or condition-annealed longitudinally welded pipes of lightweight metal, wherein the annealing in the production sequence takes place in the forming section before welding.

13. The application of the process according to Claim 1 to the manufacture of rims for motor vehicles from light metal strip in a thickness range of 2 - 6 mm, wherein before the critical cold forming the regions of the long edges of the individual strips produced after cross-cutting are soft-annealed.

## Revendications

1. Procédé pour fabriquer des éléments de construction à déformation critique à partir de bandes de métal léger, avantageusement des alliages d'aluminium de dureté naturelle du type AlMg ou AlMg-Mn, dans lequel l'élément de construction souhaité est fabriqué par au moins une étape de déformation à froid à partir de la bande, et la capacité de déformation est améliorée au moyen d'un recuit avant la déformation à froid,
caractérisé en ce qu'uniquement la zone des bords longitudinaux des bandes longitudinalement subdivisées à froid est réchauffée à une profondeur, se trouvant dans la largeur de bande, d'au moins 1 mm jusqu'au maximum 10 mm, en ce qu'une plage température-temps usuelle pour le recuit est parcourue, une température supérieure à 150° C sur un intervalle de temps supérieur à 0,1 et jusqu'au maximum 10 secondes étant atteinte.

2. Procédé selon la revendication 1,
caractérisé en ce que l'application de chaleur est effectuée au choix ou en combinaison par rayonnement, convection ou conduction.

3. Procédé selon les revendications 1 et 2,
caractérisé en ce que le recuit est effectué en synchronisme avec l'installation de fabrication d'un élément de construction en bande légère.

4. Procédé selon les revendications 1 et 2,
caractérisé en ce que l'opération de recuit est effectuée après le clivage ou avant l'embobinage.

5. Procédé selon les revendications 1 et 2,
caractérisé en ce que l'opération de recuit est effectuée après l'embobinage et avant le dressage.

6. Procédé selon les revendications 1 et 2,
caractérisé en ce que l'opération de recuit est effectuée après le dressage et avant le fractionnement transversal, pour éliminer le durcissement à froid supplémentaire engendré par le processus de dressage.

7. Procédé selon les revendications 1 et 2,
caractérisé en ce que l'opération de recuit est effectuée après le fractionnement transversal sur des bandes individuelles.

8. Procédé selon la revendication 7,
caractérisé en ce que l'opération de recuit est effectuée après le fractionnement transversal dans le magasin d'empilage.

9. Procédé selon les revendications 1 et 2,
caractérisé en ce que l'opération de recuit est effectuée sur le bandage avant le profilage à froid.

10. Procédé selon les revendications 1 et 2,
caractérisé en ce que l'opération de recuit est effectuée, lors du profilage à froid, avant l'étape de déformation critique.

11. Procédé selon une des revendications précédentes,
caractérisé en ce que le recuit est effectué par induction.

12. Utilisation du procédé selon la revendication 1 pour fabriquer des tubes soudés à soudure longitudinale recuits en métal léger, le recuit étant effectué en cours de fabrication dans l'étendue de moulage avant le soudage.

13. Utilisation du procédé selon la revendication 1 pour fabriquer des jantes de véhicules automobiles à partir d'une bande de métal léger ayant une plage d'épaisseur de 2 - 6 mm, les zones des bords longitudinaux des bandes individuelles, engendrées après le fractionnement transversal, étant recuites avant la déformation à froid critique.
